# EUROPEAN PATENT APPLICATION

(11) **EP 4 422 031 A1**
(43) Date of publication of application: **28.08.2024**
(21) Application number: 22901839.5
(22) Date of filing: 01.12.2022
(51) Int. Cl.: H02J 50/10, H02J 50/80

(54) **WIRELESS CHARGING METHOD AND ELECTRONIC DEVICE SUPPORTING SAME**

(30) Priority: 03.12.2021 KR 20210172069
(71) Applicant: Samsung Electronics Co., Ltd., Suwon-si, Gyeonggi-do 16677 (KR)
(72) Inventor: KIM, Dohyeon, Suwon-si Gyeonggi-do 16677 (KR); KIM, Yusu, Suwon-si Gyeonggi-do 16677 (KR)
(74) Representative: Appleyard Lees IP LLP
(86) International application number: PCT/KR2022/019399
(87) International publication number: WO 2023/101481

(57) **Abstract**

Disclosed is an electronic device configured to enable a power transmission circuit to transmit a first signal to an external electronic device through the charging coil by using a driving signal having a first frequency, to identify whether information indicating a modulation depth of a voltage output from a rectifier circuit of the external electronic device is received from the external electronic device, and to determine whether to adjust the first frequency to a second frequency different from the first frequency, based on whether the information is received.

## Description

### [Technical Field]

Various embodiments of the disclosure relate to a wireless charging method and an electronic device supporting the same.

### [Background Art]

An electronic device (e.g., a power transmission device) may transmit a signal for providing power to a second charging coil (e.g., a wireless charging antenna including a radiation pattern) of an external electronic device (e.g., a power reception device) by using a first charging coil (e.g., a wireless charging antenna including a radiation pattern) in a designated frequency band. The external electronic device may process the signal by using a power reception circuit and a battery charging circuit, thereby charging a battery of the external electronic device.

### [Disclosure of Invention]

### [Technical Problem]

A charging voltage of an external electronic device may be unstable depending on an arrangement state (e.g., an alignment or misalignment state) of an electronic device and the external electronic device or a load condition of the external electronic device. For example, in the misalignment state in which the external electronic device is misaligned with a wireless charging area of the electronic device, the charging voltage of the external electronic device may have a large amplitude (e.g., modulation depth). When the amplitude of the charging voltage of the external electronic device is large, wireless charging efficiency between the electronic device and the external electronic device may be reduced, and noise (e.g., audible noise) may be generated due to shaking of a component within the external electronic device.

To adjust the amplitude of the charging voltage in the external electronic device, a switching operation of a voltage regulation circuit of the external electronic device may be controlled. For example, in the voltage regulation circuit including a plurality of electronic elements (e.g., a capacitor, an inductor, a resistor, or a combination thereof) of the external electronic device, each of the plurality of electronic elements may be switched on or off, thereby reducing the amplitude of the charging voltage. However, the arrangement state of the electronic device and the external electronic device or the load condition of the external electronic device may include a great number of variables, and a voltage regulation circuit including a greater number of electronic components, which may be difficult to implement, is required for the external electronic device to respond to these variables.

Various embodiments of the disclosure may provide a wireless charging method for adaptively responding to an arrangement state of an electronic device and an external electronic device or a load condition of the external electronic device to reduce an amplitude of a charging voltage of the external electronic device, and an electronic device supporting the same.

### [Solution to Problem]

According to an embodiment, an electronic device may include a power transmission circuit, a charging coil, and a control circuit electrically connected to the power transmission circuit and the charging coil, wherein the control circuit may be configured to control the power transmission circuit such that the power transmission circuit transmits a first signal to an external electronic device through the charging coil by using a driving signal having a first frequency, identify whether information indicating a modulation depth of a voltage output from a rectifier circuit of the external electronic device is received from the external electronic device, and determine whether to adjust the first frequency to a second frequency different from the first frequency, based on whether the information is received.

According to an embodiment, a wireless charging method may include controlling a power transmission circuit of an electronic device such that the power transmission circuit transmits a first signal to an external electronic device through a charging coil of the electronic device by using a driving signal having a first frequency, identifying whether information indicating a modulation depth of a voltage output from a rectifier circuit of the external electronic device is received from the external electronic device, and determining whether to adjust the first frequency to a second frequency different from the first frequency, based on whether the information is received.

### [Advantageous Effects of Invention]

A wireless charging method and an electronic device supporting the same according to various embodiments of the disclosure may adaptively respond to an arrangement state of the electronic device and an external electronic device or a load condition of the external electronic device in a wireless charging operation without adding or changing a component related to a power reception circuit of the external electronic device, thereby reducing an amplitude of a charging voltage of the external electronic device.

Further, according to various embodiments of the disclosure, the amplitude of the charging voltage of the external electronic device may be reduced while at least maintaining wireless charging efficiency between the electronic device and the external electronic device.

In addition, various effects directly or indirectly identified through this document may be provided.

### [Brief Description of Drawings]

FIG. 1 illustrates an electronic device in a network environment according to various embodiments;
FIG. 2 illustrates a power management module and a battery of an electronic device according to an embodiment;
FIG. 3 illustrates a wireless charging environment of an electronic device and an external electronic device according to an embodiment;
FIG. 4 illustrates some components of each of an electronic device and an external electronic device according to an embodiment;
FIG. 5 illustrates a wireless charging process between an electronic device and an external electronic device according to an embodiment;
FIG. 6 illustrates a component of an electronic device according to an embodiment;
FIG. 7 illustrates a functional configuration of each of an electronic device and an external electronic device according to an embodiment;
FIG. 8A illustrates a voltage gain of an external electronic device according to frequency adjustment of an electronic device according to various embodiments;
FIG. 8B illustrates an operating voltage of an electronic device according to frequency adjustment of the electronic device according to various embodiments;
FIG. 9 illustrates a wireless charging method of an electronic device according to an embodiment; and
FIG. 10 illustrates a wireless charging method of an external electronic device according to various embodiments.

In describing the drawings, the same reference numerals may be used to refer to the same or like elements.

### [Mode for the Invention]

Hereinafter, various embodiments of the present document will be described with reference to the accompanying drawings. However, the present document is not intended to limit specific embodiments, and should be understood to include various modifications, equivalents, and/or alternatives of the embodiments of the present invention.

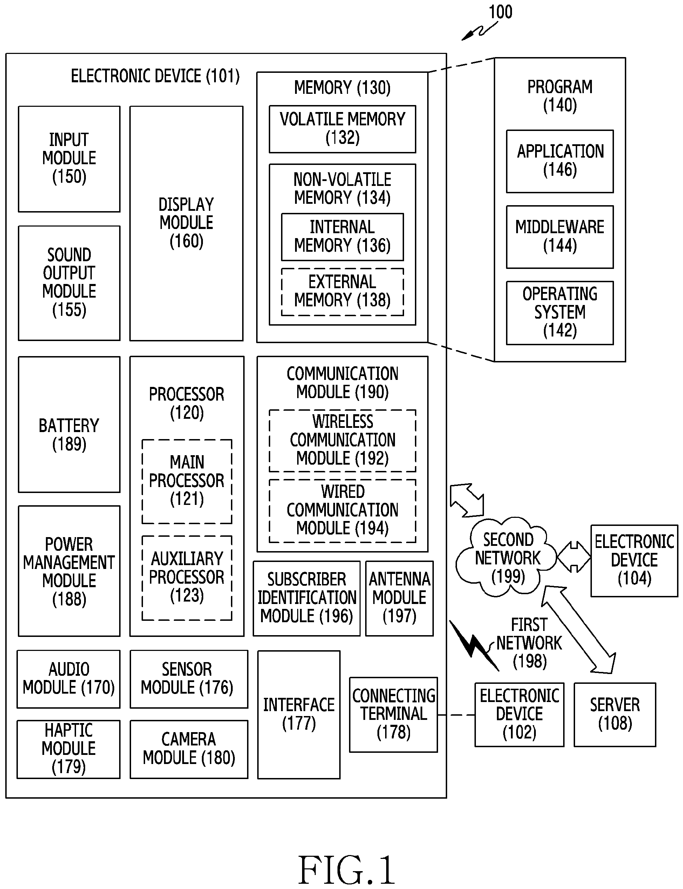

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

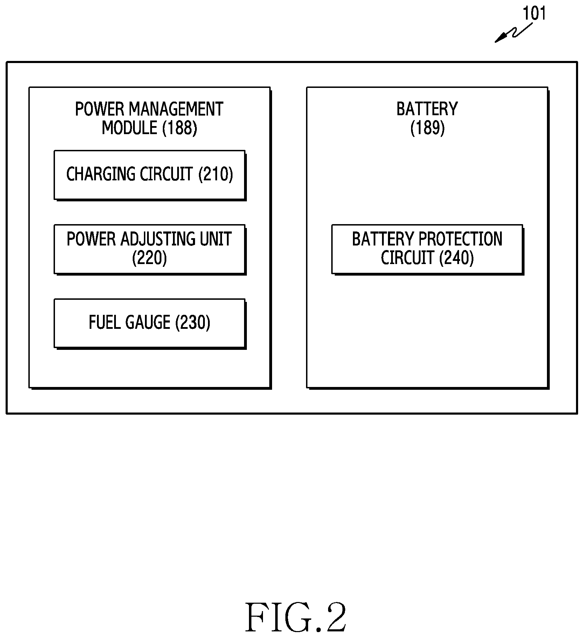

Fig. 2 is a block diagram 200 illustrating the power management module 188 and the battery 189 according to various embodiments. Referring to Fig. 2, the power management module 188 may include charging circuitry 210, a power adjuster 220, or a power gauge 230. The charging circuitry 210 may charge the battery 189 by using power supplied from an external power source outside the electronic device 101. According to an embodiment, the charging circuitry 210 may select a charging scheme (e.g., normal charging or quick charging) based at least in part on a type of the external power source (e.g., a power outlet, a USB, or wireless charging), magnitude of power suppliable from the external power source (e.g., about 20 Watt or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low drop out (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to abnormal, the power management module 188 may adjust the charging of the battery 189 (e.g., reduce the charging current or voltage, or stop the charging). According to an embodiment, at least some of the functions of the power management module 188 may be performed by an external control device (e.g., the processor 120).

The battery 189, according to an embodiment, may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an embodiment, at least part of the charging state information or use state information regarding the battery 189 may be measured using a corresponding sensor (e.g., a temperature sensor) of the sensor module 176, the power gauge 230, or the power management module 188.. According to an embodiment, the corresponding sensor (e.g., a temperature sensor) of the sensor module 176 may be included as part of the PCM 240, or may be disposed near the battery 189 as a separate device.

Hereinafter, an electronic device or an external electronic device to be mentioned with reference to the drawings may correspond to the electronic device of FIG. 1 or 2 (e.g., the electronic device 101 of FIG. 1 or 2). In an embodiment, the electronic device may include at least one of a Tx function (or power transmission function) of transmitting wireless power to an adjacent (or contacted) external electronic device (e.g., a power reception device) to charge the external electronic device and an Rx function (e.g., a power reception function) of receiving wireless power from the external electronic device (e.g., a power transmission device) to charge a mounted battery. Similarly, the external electronic device may include at least one of a Tx function of transmitting wireless power to an adjacent (or contacted) electronic device (e.g., a power reception device) and an Rx function of receiving wireless power from the electronic device (e.g., a power transmission device). According to various embodiments, a function or operation of the electronic device to be described below may be substantially equally performed by the external electronic device, and a function or operation of the external electronic device may also be substantially equally performed by the electronic device.

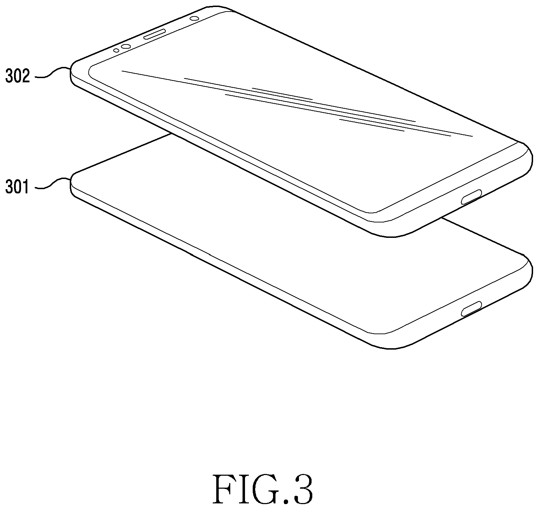

FIG. 3 illustrates a wireless charging environment of an electronic device and an external electronic device according to an embodiment.

Referring to FIG. 3, the electronic device 301 (e.g., a power transmission device) according to an embodiment may transmit wireless power to charge the external electronic device 302 (e.g., a power reception device). For example, when a battery of the external electronic device 302 is not fully-charged or an available power amount of the battery is less than a specified level, the electronic device 301 may transmit wireless power to charge the battery of the external electronic device 302.

According to an embodiment, the electronic device 301 may determine proximity of the external electronic device 302 to the electronic device 301 (or determine presence of the external electronic device 302 adjacent to the electronic device 301) at a time before transmitting the wireless power, for example, in a state of waiting for wireless charging. To this end, the electronic device 301 may transmit a signal (e.g., a ping signal) for determining proximity (or presence) of the external electronic device 302 or determining whether a signal or data transmitted from the electronic device 301 is able to reach the external electronic device 302. In an embodiment, the electronic device 301 may receive a signal (e.g., an ack signal) in response to the transmitted signal from the adjacent external electronic device 302. The electronic device 301 may determine that the external electronic device 302 is in contact or is adjacent within a specified distance, based on reception of the responding signal.

According to an embodiment, the electronic device 301 and the external electronic device 302 may be devices of the same type. For example, each of the electronic device 301 and the external electronic device 302 may include a mobile device (e.g., a smartphone). According to another embodiment, the electronic device 301 and the external electronic device 302 may be devices of different types that are at least partially different from each other. For example, one of the electronic device 301 and the external electronic device 302 may include a wireless charging device (e.g., a wireless charging pad), and the other electronic device may include a mobile device (e.g., a smartphone, a wearable device, or an audio output device (wireless earphone)).

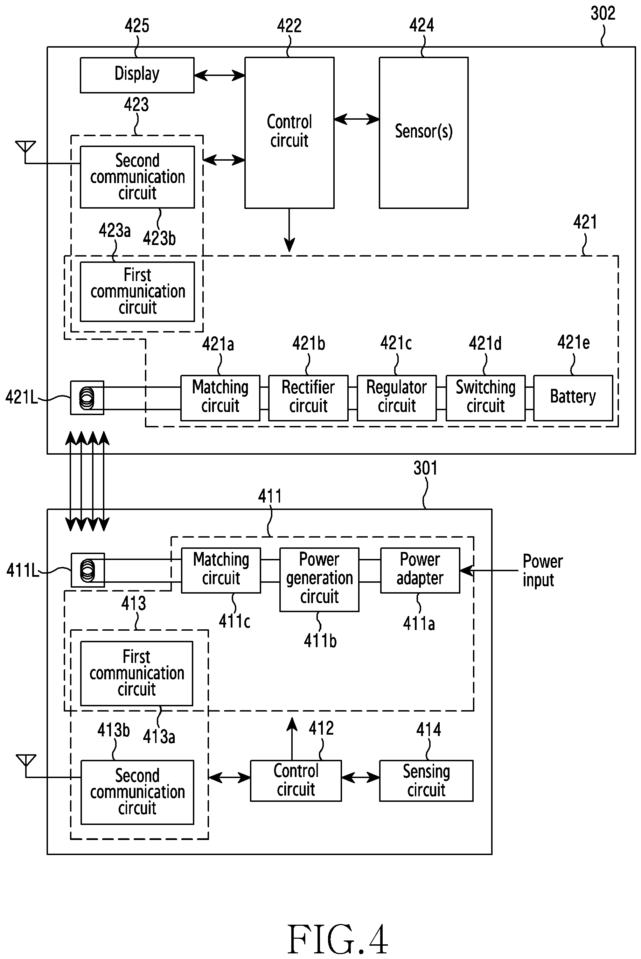

FIG. 4 illustrates some components of each of an electronic device and an external electronic device according to an embodiment.

Referring to FIG. 4, the electronic device 301 may transmit wireless power to an external electronic device 302 that is in contact with the electronic device 301 or is adjacent to the electronic device 302 within a specified distance by using a Tx function (or power transmission function). In an embodiment, the electronic device 301 may include at least one of a power transmission circuit 411, a control circuit 412, a communication circuit 413, and a sensing circuit 414.

According to an embodiment, the power transmission circuit 411 may receive power from an external power source (e.g., a wall power source, an auxiliary battery device, a laptop computer, a desktop computer, or a smartphone). According to an embodiment, the power transmission circuit 411 may include a power adapter 411a to convert a voltage of the received power, a power generation circuit 411b to generate power, a first charging coil 411L to transmit power., and/or a matching circuit 411c to improve efficiency between the first charging coil 411L and a second charging coil 421L of the external electronic device 302. In various embodiments, the power transmission circuit 411 may include at least one of the power adapter 411a, the power generation circuit 411b, the first charging coil 411L, and the matching circuit 411c in a plurality of pieces in order to transmit wireless power to a plurality of external electronic devices. In various embodiments, the first charging coil 411L may include a wireless charging antenna including a radiation pattern. In various embodiments, a function of the first charging coil 411L may not be limited to power transmission. For example, when the electronic device 301 receives wireless power from the external electronic device 302 by using an Rx function (or power reception function), the first charging coil 411L may receive wireless power from the second charging coil 421L of the external electronic device 302.

According to an embodiment, the control circuit 412 may perform overall control related to wireless power transmission of the electronic device 301, and may generate various signals or data involved in the wireless power transmission to transmit the signals or data to the communication circuit 413. According to an embodiment, the control circuit 412 may calculate power (or amount of power) to be transmitted to the external electronic device 302, based on a signal or data received from the external electronic device 302 based on the communication circuit 413. The control circuit 412 may control the power transmission circuit 411 so that the calculated power is transmitted to the external electronic device 302 through the first charging coil 411L.

According to an embodiment, the control circuit 412 may be integrated with a processor (e.g., the processor 120 of FIG. 1) included in the electronic device 301, and at least some of functions or operations of the control circuit 412 may be may be performed by the processor 120. According to another embodiment, the control circuit 412 may be configured independently of the processor 120, and some of the functions or operations of the control circuit 412 may be performed by the processor 120. According to still another embodiment, the control circuit 412 may be configured independently of the processor 120, and the functions or operations of the control circuit 412 may be performed by the control circuit 412 independently of the processor 120.

According to an embodiment, the communication circuit 413 may include at least one of a first communication circuit 413a and a second communication circuit 413b. According to an embodiment, the first communication circuit 413a may communicate with a first communication circuit 423a of the external electronic device 302 by using the same frequency as used for the first charging coil 411L to transmit wireless power or a frequency in a band adjacent to the frequency used to transmit the wireless power. For example, the first communication circuit 413a may support in-band first communication of transmitting a signal or data to the first communication circuit 423a of the external electronic device 302 by using the first charging coil 411L. According to an embodiment, the second communication circuit 413b may communicate with a second communication circuit 423b of the external electronic device 302 by using a frequency in a band different from the frequency used for the first charging coil 411L to transmit the wireless power. For example, the second communication circuit 413b may support out-band second communication of transmitting a signal or data to the second communication circuit 423b of the external electronic device 302 by using an antenna module (e.g., the antenna module 197 of FIG. 1) included in the electronic device 301. According to various embodiments, the second communication supported by the second communication circuit 413b may include at least one of Bluetooth Low Energy, Bluetooth, Wi-Fi, cellular communication, and near-field communication (NFC).

According to an embodiment, the sensing circuit 414 may include at least one sensor. The sensing circuit 414 may detect at least one state of the electronic device 301 by using the at least one sensor. According to an embodiment, the sensing circuit 414 may include at least one of a temperature sensor, a motion sensor, a voltage sensor, and a current sensor. The sensing circuit 414 may detect a temperature state of the electronic device 301 by using the temperature sensor, or may detect a movement (or motion) state of the electronic device 301 by using the motion sensor. Further, the sensing circuit 414 may detect an output signal state (e.g., a current level, a voltage level, and/or a power level) of the electronic device 301 by using the voltage sensor or the current sensor. According to an embodiment, the voltage sensor or the current sensor may measure a signal to the power transmission circuit 411 in order to detect the output signal state of the electronic device 301. For example, the voltage sensor or current sensor may measure a signal to at least one of the matching circuit 411c and the power generation circuit 411b, and may accordingly include a circuit to measure a signal to a front end of the first charging coil 411L.

Although not shown, according to various embodiments, the electronic device 301 may further include a display module (e.g., the display module 160 of FIG. 1). The electronic device 301 may output various pieces of information (e.g., notification information about proximity (or presence) of the external electronic device 302, information about a charging state of the electronic device 301, and/or information about a charging state of the external electronic device 302) related to wireless charging by using the display module 160.

In an embodiment, the external electronic device 302 may receive wireless power from the electronic device 301 that is in contact with the external electronic device 302 or is adjacent to the external electronic device 302 within the specified distance by using an Rx function (or power reception function). In an embodiment, the external electronic device 302 may include at least one of a power reception circuit 421, a control circuit 422, a communication circuit 423, at least one sensor 424, and a display 425. A redundant description of components corresponding to those of the electronic device 301 described above among the components of the external electronic device 302 may be omitted.

In an embodiment, the power reception circuit 421 may include the second charging coil 421L to receive wireless power from the first charging coil 411L of the electronic device 301, a matching circuit 421a capable of improving efficiency between the first charging coil 411L and the second charging coil 421L, a rectifier circuit 421b to rectify received AC power to a DC, a regulator circuit 421c to adjust a charging voltage, a battery 421e, and a switching circuit 421d to selectively connect the regulator circuit 421c and the battery 421e. In various embodiments, the second charging coil 421L may include a wireless charging antenna including a radiation pattern. In various embodiments, a function of the second charging coil 421L may not be limited to power reception. For example, when the external electronic device 302 transmits wireless power to the electronic device 301 by using a Tx function (or power transmission function), the second charging coil 421L may transmit wireless power to the first charging coil 411L of the electronic device 301.

In an embodiment, the control circuit 422 may perform overall control related to wireless power reception of the external electronic device 302, and may generate various signals or data involved in the wireless power reception to transmit the signals or data to the communication circuit 423.

In an embodiment, the communication circuit 423 may include at least one of the first communication circuit 423a to support the in-band first communication with the first communication circuit 413a of the electronic device 301 by using the power reception coil 421L and the second communication circuit 423b to support the out-band second communication with the second communication circuit 413b of the electronic device 301 by using an antenna module (e.g., the antenna module 197 of FIG. 1) of the external electronic device 302.

In an embodiment, the at least one sensor 424 may include at least one of a temperature sensor, a motion sensor, a voltage sensor, and a current sensor. The at least one sensor 424 may detect at least one state of the external electronic device 302 by using the foregoing sensors. The display 425 may visually display various pieces of information related to wireless charging of the external electronic device 302.

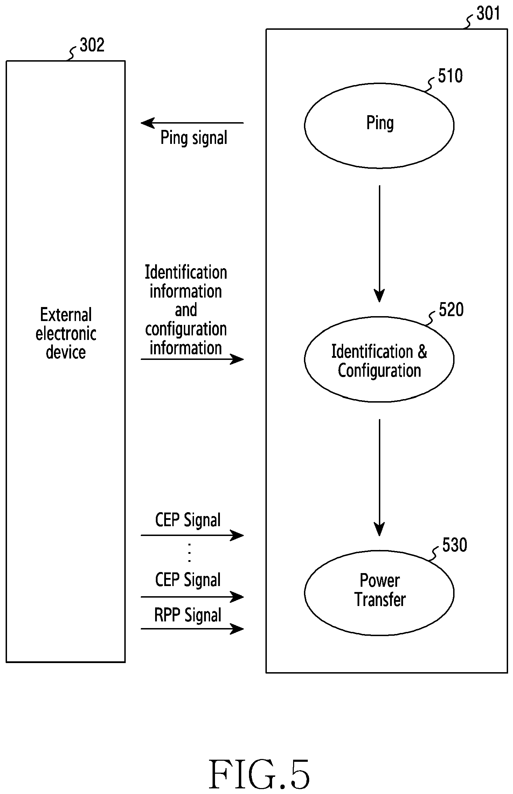

FIG. 5 illustrates a wireless charging process between an electronic device and an external electronic device according to an embodiment.

Referring to FIG. 5, in an operation of implementing a Tx function (or power transmission function), the electronic device 301 may sequentially perform a ping operation 510, an identification and configuration operation 520, and a power transfer operation 530. Based on the ping operation 510, the authentication and configuration operation 520, and the power transfer operation 530, the electronic device 301 may detect and identify the external electronic device 302 that is in contact with the electronic device 301 or is adjacent to the electronic device 301 within a specified distance, and may transmit wireless power to the detected and identified external electronic device 302.

In an embodiment, a control circuit (e.g., the control circuit 412 of FIG. 4) of the electronic device 301 may perform the ping operation 510 while waiting (or preparing) for wireless charging. For example, the control circuit 412 may transmit a digital or analog ping signal for detecting a target of the wireless charging through the ping operation 510. According to an embodiment, the control circuit 412 may receive an ack signal in response to the ping signal from the external electronic device 302. The control circuit 412 may recognize presence of the external electronic device 302 (e.g., contact of the external electronic device 302 with the electronic device 301 or proximity of the external electronic device 302 to the electronic device 301 within a specified distance), based on reception of the ack signal.

According to various embodiments, in the ping operation 510, the control circuit 412 of the electronic device 301 may determine at least one parameter related to transmission of the ping signal. For example, the control circuit 412 may determine a parameter related to at least one of a frequency of the ping signal, a voltage applied to a power transmission circuit (e.g., the power transmission circuit 411 of FIG. 4 ) to transmit the ping signal, and a transmission period of the ping signal. In various embodiments, the at least one parameter may be configured to a default in an initial configuration operation of a wireless charging system of the electronic device 301.

In an embodiment, when the presence of the external electronic device 302 is recognized based on the reception of the ack signal, the control circuit 412 of the electronic device 301 may establish in-band first communication with the external electronic device 302 by using a first communication circuit (e.g., the first communication circuit 413a of FIG. 4) in the identification and configuration operation 520. The control circuit 412 may receive at least one signal or data from the external electronic device 302 by using the first communication. The at least one signal or data may include, for example, information for identifying the external electronic device 302 (e.g., a wireless communication ID of the external electronic device 302). In an embodiment, the information received from the external electronic device 302 corresponds to information (e.g., a wireless communication ID of at least one external electronic device identified for wireless power sharing with the electronic device 301) previously recorded in a memory (e.g., the memory 130 of FIG. 1), the control circuit 412 may determine the external electronic device 302 recognized in the ping operation 510 as a valid device for the wireless charging. In various embodiments, the at least one signal or data may further include various pieces of configuration information required for the external electronic device 302 to receive wireless power from the electronic device 301.

In an embodiment, when the external electronic device 302 is identified based on the information received from the external electronic device 302, the control circuit 412 of the electronic device 301 may transmit wireless power to the external electronic device 302 in the power transmission operation 530. According to an embodiment, while transmitting the wireless power to the external electronic device 302, the control circuit 412 may receive at least one signal or data from the external electronic device 302 by using the first communication established with the external electronic device 302. For example, the control circuit 412 may receive the signal or data including at least one of a control error packet (CEP) indicating notification information about power (or amount of power) required by the external electronic device 302 for charging, a received power packet (RPP) indicating size information about power (or amount of power) that the external electronic device 302 is receiving, an end power transfer (EPT) indicating a wireless charging stop request of the external electronic device 302, and a point-to-point protocol (PPP) indicating a data link protocol between the electronic device 301 and the external electronic device 302. According to various embodiments, the signal or data that the electronic device 301 receives from the external electronic device 302 through the first communication may further include various packets, messages, or information related to wireless charging in addition to at least one of the CEP, the RPP, the EPT, and the PPP. In an embodiment, the control circuit 412 may adjust at least part of the wireless power transmitted to the external electronic device 302, based on at least one of the CEP and the RPP received from the external electronic device 302 via the first communication.

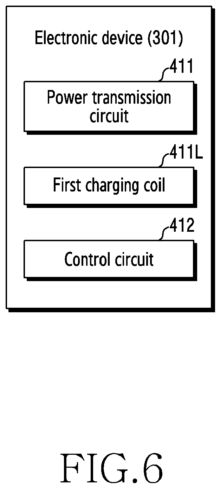

FIG. 6 illustrates a component of an electronic device according to an embodiment.

Referring to FIG. 6, the electronic device 301 (e.g., the electronic device 301 of FIG. 3, FIG. 4, and/or FIG. 5) according to an embodiment may include a power transmission circuit 411, a first charging coil 411L, and a control circuit 412. In various embodiments, the electronic device 301 may omit at least one of the foregoing components, or may further include at least one other component. For example, the electronic device 301 may further include a communication circuit (e.g., the first communication circuit 413a) capable of transmitting a signal or data to an external electronic device 302 (e.g., the external electronic device 302 of FIG. 3, FIG. 4, and/or FIG. 5) through in-band communication.

According to an embodiment, the power transmission circuit 411 may generate a signal to be transmitted to the external electronic device 302 by using the first charging coil 411L. For example, the power transmission circuit 411 may generate an AC signal for transmitting wireless power to the external electronic device 302 through the first charging coil 411L, based on a first frequency and a first operating voltage selected from a specified frequency band (e.g., 110 kHz to 150 kHz) and a specified operating voltage range (e.g., 2V to 5V).

According to an embodiment, while generating a first signal (e.g., an AC signal) for transmitting wireless power to the external electronic device 302, the power transmission circuit 411 may adjust a frequency and an operating voltage. For example, the power transmission circuit 411 may change the first frequency to a second frequency and change the first operating voltage to a second operating voltage, based on whether information (hereinafter, modulation depth information) indicating a modulation depth of a voltage (e.g., an amplitude of a charging voltage) output from a rectifier circuit (e.g., the rectifier circuit 421b of FIG. 4) of the external electronic device 302 is received from the external electronic device 302. Further, the power transmission circuit 411 may generate a second signal (e.g., an AC signal) for transmitting wireless power to the external electronic device 302 through the first charging coil 411L, based on the changed second frequency and second operating voltage. According to an embodiment, the second signal may be an AC signal greater than the first signal.

According to an embodiment, the first charging coil 411L may transmit the signal output from the power transmission circuit 411 to the external electronic device 302 by using the specified frequency band. For example, the first charging coil 411L may transmit the AC signal output from the power transmission circuit 411 to the external electronic device 302 by using the frequency adjusted by the power transmission circuit 411.

According to an embodiment, the control circuit 412 may control the frequency and operating voltage of the power transmission circuit 411 to be adjusted, based on whether the modulation depth information is received from the external electronic device 302. For example, when the modulation depth information is received from the external electronic device 302, based on the in-band communication using the first communication circuit 413a, the control circuit 412 may control the frequency and operating voltage of the power transmission circuit 411 to be adjusted. In another example, when the modulation depth information is not received from the external electronic device 302, based on the in-band communication using the first communication circuit 413a, the control circuit 412 may control maintain the frequency and operating voltage of the power transmission circuit 411 to be maintained.

According to an embodiment, the control circuit 411 may identify whether the modulation depth information is received from the external electronic device 302 every specified period. The control circuit 411 may control the frequency and operating voltage of the power transmission circuit 411 to be adjusted whenever the modulation depth information is received. For example, when receiving the modulation depth information after controlling the first frequency of the power transmission circuit 411 to be adjusted to the second frequency, the control circuit 411 may select a third frequency, which is different from the first frequency and the second frequency, in the specified frequency band as the frequency of the power transmission circuit 411.

According to an embodiment, the control circuit 411 may determine a variance (or change direction) in the frequency of the power transmission circuit 411, based on the modulation depth information received from the external electronic device 302. For example, the control circuit 411 may control the first frequency to be adjusted to the second frequency higher than the first frequency, based on a modulation depth of a voltage indicated by first modulation depth information received in a first period being a first value, and may control the second frequency to be adjusted to the third frequency lower than the first frequency, based on a modulation depth of a voltage indicated by second modulation depth information received in a second period after the first period being a second value greater than the first value.

According to an embodiment, the control circuit 412 may control the operating voltage of the power transmission circuit 411 to be adjusted in response to adjustment of the frequency of the power transmission circuit 411. For example, when receiving the modulation depth information from the external electronic device 302, the control circuit 412 may increase or decrease the frequency of the power transmission circuit 411, and may control the operating voltage of the power transmission circuit 411 to be adjusted accordingly.

According to an embodiment, when the operating voltage of the power transmission circuit 411 adjusted in response to adjustment of the frequency of the power transmission circuit 411 from the first frequency to the second frequency is not included in the specified voltage range, the control circuit 412 may stop a function of adjusting the frequency and the voltage. For example, when the adjusted operating voltage of the power transmission circuit 411 is not included in the specified voltage range, the control circuit 412 may control the adjusted second frequency of the power transmission circuit 411 to be restored to the first frequency. In another example, when the adjusted operating voltage of the power transmission circuit 411 is not included in the specified voltage range, the control circuit 412 may block reception of information (e.g., the modulation depth information) from the external electronic device 302, or may ignore information received from the external electronic device 302.

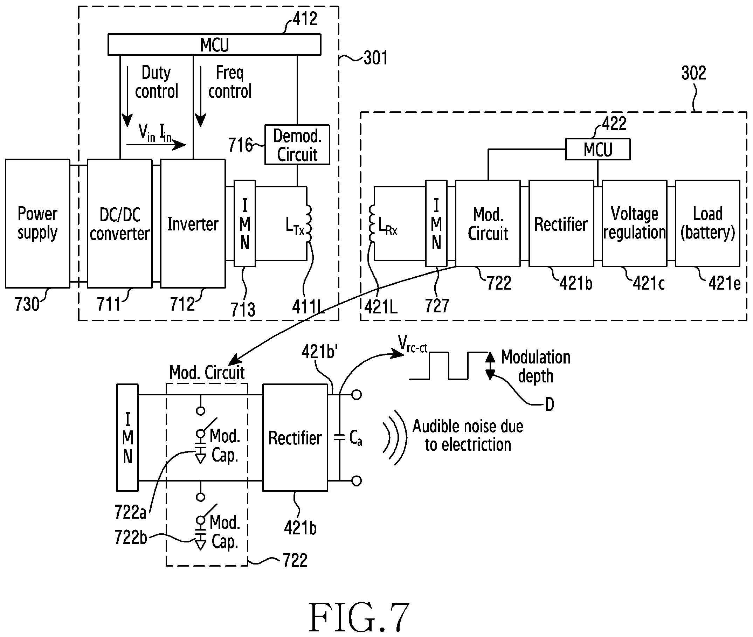

FIG. 7 illustrates a functional configuration of each of an electronic device and an external electronic device according to an embodiment.

Referring to FIG. 7, the electronic device 301 and the external electronic device 302 according to an embodiment may transmit and receive wireless power in an environment in which the electronic device 301 and the external electronic device 302 are in contact with each other or are adjacent to each other within a specified distance.

According to an embodiment, the electronic device 301 may include a converter 711, an inverter 712, an impedance matching circuit 713, a first charging coil 411L, a control circuit 412, and/or a demodulation circuit 716. In various embodiments, the converter 711, the inverter 712, and the impedance matching circuit 713 may be configured or referred to as one power transmission circuit (e.g., the power transmission circuit 411 in FIG. 4 and/or FIG. 6).

According to an embodiment, the converter 711 may be supplied with power from a power supply device 730 (e.g., a power supply). In an embodiment, the converter 711 may rectify the supplied power by transforming (stepping up or down) a voltage of the supplied power. In an embodiment, the converter 711 may output the rectified power (e.g., a DC signal) to the inverter 712, based on an operating voltage adjusted under control of the control circuit 412. For example, when an operating duty cycle is adjusted by the control circuit 412, the converter 711 may adjust the operating voltage, based on the adjusted operating duty cycle. In an embodiment, when the electronic device 301 receives information (hereinafter, modulation depth information) indicating a modulation depth D of a voltage output from a rectifier circuit 421b of the external electronic device 302 from the external electronic device 302, the converter 711 may adjust the operating voltage. In an embodiment, the converter 711 may include a DC-DC converter.

According to an embodiment, the inverter 712 may receive the power output from the converter 711, and may convert the DC signal into an AC signal. In an embodiment, when the electronic device 301 receives the modulation depth information from the external electronic device 302, the inverter 712 may receive the DC signal of the adjusted operating voltage from the converter 711. In an embodiment, the inverter 712 may adjust the operating frequency, based on control of the control circuit 412. For example, when the modulation depth information is received from the external electronic device 302, the inverter 712 may increase or decrease a frequency in a specified frequency band under control of the control circuit 412.

According to an embodiment, the impedance matching circuit 713 may change at least one of capacitance or reactance of a circuit connected to the first charging coil 411L under control of the control circuit 412, thereby matching impedance of the electronic device 301 and impedance of the external electronic device 302.

According to an embodiment, the first charging coil 411L may transmit the AC signal of the power output from the inverter 712 to a second charging coil 421L of the external electronic device 302 by using a specified frequency. In an embodiment, when the modulation depth information is received from the external electronic device 302, the first charging coil 411L may transmit the AC signal to the second charging coil 421L by using the frequency adjusted by the inverter 712.

According to an embodiment, the control circuit 412 may monitor whether the modulation depth information is transmitted from the external electronic device 302 every specified period (e.g., 3 sec), based on in-band first communication using a first communication circuit 413a (or out-band second communication using a second communication circuit 413b). For example, when receiving first modulation depth information from the external electronic device 302 in a first period, the control circuit 412 may control the operating voltage of the converter 711 to be adjusted, and may control the frequency of the inverter 712 to be adjusted. In another example, the control circuit 412 may control a first frequency of the inverter 712 to be adjusted to a second frequency higher than the first frequency, based on a modulation depth D of a voltage indicated by the first modulation depth information received in the first period being a first value, and may control the second frequency of the inverter 712 to be adjusted to a third frequency lower than the first frequency, based on a modulation depth D of a voltage indicated by second modulation depth information received in a second period after the first period being a second value greater than the first value.

In various embodiments, the modulation depth information may include at least one of an absolute value of an output voltage detected at an output terminal 421b' of the rectifier circuit 421b of the external electronic device 302 or a variance in the output voltage detected at the output terminal 421b' of the rectifier circuit 421b.

According to an embodiment, the control circuit 412 may control the operating voltage of the converter 711 and the frequency of the inverter 712 to be adjusted whenever the modulation depth information is received from the external electronic device 302. For example, when receiving the modulation depth information after controlling the first frequency of the inverter 712 to be adjusted to the second frequency, the control circuit 412 may select the third frequency, which is different from the first frequency and the second frequency, in the specified frequency band, as the frequency of the inverter 712, and may adjust the operating voltage of the converter 711 to correspond to the selected third frequency.

According to an embodiment, the demodulation circuit 716 may obtain (or receive) a packet modulated by a modulation 722 of the external electronic device 302 from the external electronic device 302, based on the in-band first communication using the first communication circuit 413a (or the out-band second communication using the second communication circuit 413b). In an embodiment, the demodulation circuit 716 may demodulate the obtained packet. The control circuit 412 may obtain information about a voltage value from the demodulated packet. In an embodiment, the voltage value may be inversely proportional to a size of the modulation depth D of the voltage output from the rectifier circuit 421b of the external electronic device 302 according to change (or adjustment) of the frequency of the inverter 712. For example, the voltage value may increase as the size of the modulation depth D decreases according to the change of the frequency of the inverter 712.

According to an embodiment, the external electronic device 302 may include the second charging coil 421L, the modulation circuit 722, the rectifier circuit 421b, a regulator circuit 421c, a battery 421e, a control circuit 422, and/or an impedance matching circuit 727. In various embodiments, the modulation circuit 722, the rectifier circuit 421b, the regulator circuit 421c, and the battery 421e may be configured or referred to as one power reception circuit (e.g., the power reception circuit 421 of FIG. 4).

According to an embodiment, the second charging coil 421L may receive the AC signal for obtaining power from the first charging coil 411L by using the specified frequency.

According to an embodiment, the modulation circuit 722 may improve efficiency of the AC signal received through the second charging coil 421L. For example, the modulation circuit 722 may include a plurality of capacitors 722a and 722b, and may improve the efficiency of the AC signal through a switching operation (ON or OFF) of each of the plurality of capacitors 722a and 722b. The modulation circuit 722 is illustrated as including the plurality of capacitors 722a and 722b in FIG. 7, but is not limited thereto. For example, the modulation circuit 722 may include a capacitor, an inductor, a resistor, or a combination thereof.

According to an embodiment, the rectifier circuit 421b may obtain (or receive) the AC signal from the modulation circuit 722, and may convert the AC signal into a DC signal. In an embodiment, the information indicating the modulation depth D of the voltage output from the rectifier circuit 421b may be detected at the output terminal 421b' of the rectifier circuit 421b. When the modulation depth D is greater than a specified depth value, noise (e.g., audible noise) may be generated due to shaking of a component in the external electronic device 302. In various embodiments, the rectifier circuit 421b may include a full-bridge circuit including switches formed of a plurality of metal-oxide-semiconductor field-effect transistors (MOSFETs). In various embodiments, when the rectifier circuit 421b includes the full-bridge circuit, the switches of the full-bridge circuit may be formed of not only a MOSFET but also a MOSFET, a bipolar junction transistor (BJT), a diode, or a combination thereof.

According to an embodiment, the regulator circuit 421c (e.g., regulation) may adjust a voltage value of the DC signal output from the rectifier circuit 421b, based on a specified voltage distribution ratio. When the regulator circuit 421c includes, for example, a low-dropout regulator, the regulator circuit 421c may reduce the voltage value of the DC signal to a specified voltage value.

According to an embodiment, the battery 421e may obtain (or receive) the DC signal output from the regulator circuit 421c. For example, the battery 421e may obtain the DC signal, thereby supplying power to components of the external electronic device 302. In another example, the battery 421e may be charged by obtaining the DC signal.

According to an embodiment, the control circuit 422 may transmit the information including the modulation depth D of the voltage detected at the output terminal 421b' of the rectifier circuit 421b to the electronic device 301. For example, when the modulation depth D is greater than the specified depth value, the control circuit 422 may transmit information including an absolute value of the modulation depth D or information about an increase or decrease in the modulation depth D to the electronic device 301. In another example, when the modulation depth D is smaller than the specified depth value as the operating voltage of the converter 711 and the frequency of the inverter 712 are changed (or adjusted) in the electronic device 301, the control circuit 422 may not transmit the foregoing information to the electronic device 301.

According to an embodiment, the impedance matching circuit 727 may change at least one of capacitance or reactance of a circuit connected to the second charging coil 421L under control of the control circuit 422, thereby matching the impedance of the external electronic device 302 and the impedance of the electronic device 301.

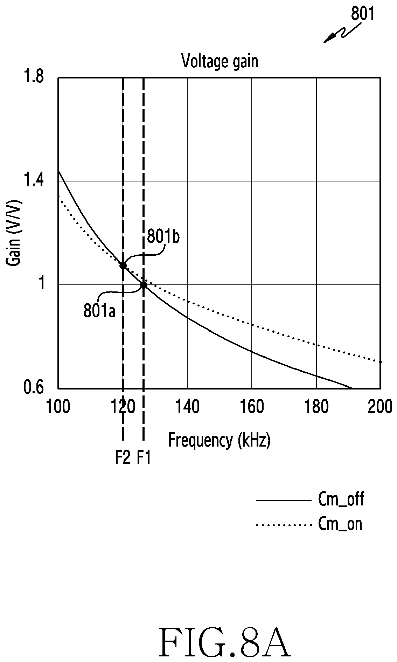

FIG. 8A illustrates a voltage gain of an external electronic device according to frequency adjustment of an electronic device according to various embodiments.

Referring to a graph 801 of FIG. 8A, as a frequency for the electronic device (e.g., the electronic device 301 of FIG. 3, FIG. 4, FIG. 5, FIG. 6, and/or FIG. 7) to transmit a power signal is adjusted, an amplitude D of a charging voltage of the external electronic device (e.g., the external electronic device 302 of FIG. 3, FIG. 4, FIG. 5, and/or FIG. FIG. 7) may converge on or approach 0V. For example, when a frequency of an inverter (e.g., the inverter 712 of FIG. 7) of the electronic device 301 is a first frequency F1 of about 127 kHz, a first voltage gain 801a in a switch-off state of a modulation circuit (e.g., the modulation circuit 722 of FIG. 7) of the external electronic device 302 may be lower than a voltage gain in a switch-on state of the modulation circuit 722. When the frequency of the inverter 712 of the electronic device 301 is a second frequency F2 of about 119 kHz, a second voltage gain 801b in the switch-off state of the modulation circuit 722 of the external electronic device 302 may be the same as the voltage gain in the switch-on state of the modulation circuit 722. Here, an adjustment or change from the first frequency F1 to the second frequency F2 may be performed based on the electronic device 301 receiving modulation depth information about the external electronic device 302 from the external electronic device 302.

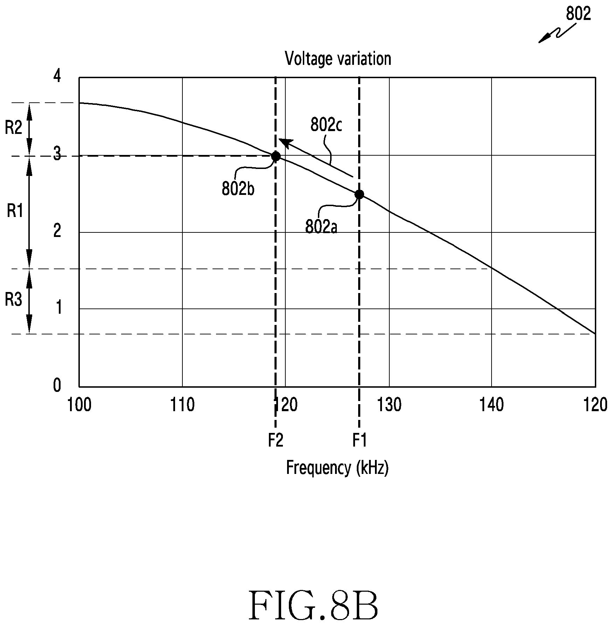

FIG. 8B illustrates an operating voltage of an electronic device according to frequency adjustment of the electronic device according to various embodiments. A graph 802 of FIG. 8B may represent a frequency adjusted in the same direction at the same time as the graph 801 of FIG. 8A.

Referring to the graph 802 of FIG. 8B, as the frequency for the electronic device to transmit a power signal is adjusted in the electronic device 301, a level of an input voltage of a demodulation circuit (e.g., the demodulation circuit 716 of FIG. 7) of the electronic device 301 may be in inverse proportion to a size of a modulation depth D of a voltage output from a rectifier circuit (e.g., the rectifier circuit 421b of FIG. 7) of the external electronic device 302. For example, when a frequency of an inverter 712 of the electronic device 301 is adjusted from a first frequency F1 of about 127 kHz to a second frequency F2 of about 119 kHz, as in the foregoing comparison between the voltage gains of FIG. 8A, the size of the modulation depth D of the voltage output from the rectifier circuit 421b of the external electronic device 302 converges on 0 V, while the level of the input voltage of the demodulation circuit 716 of the electronic device 301 may increase from a first voltage 802a (e.g., about 2V) to a second voltage value 802b (e.g., about 3V). For example, in a frequency shift direction 802c in the size of the modulation depth D of the voltage output from the rectifier circuit 421b of the external electronic device 302 is reduced, the level of the input voltage of the demodulation circuit 716 may increase to be inversely proportional thereto. Here, the electronic device 301 may control the frequency of the inverter 712 so that the level of the input voltage of the demodulation circuit 716 increases or decreases within a first range R1. When the level of the input voltage of the demodulation circuit 716 is within ranges R2 and R3 other than the first range R1, the electronic device 301 may stop control to adjust the frequency of the inverter 712, or may block reception of modulation depth information about the external electronic device 302 from the external electronic device 302. The first range R1 may be a range for supporting a hardware function.

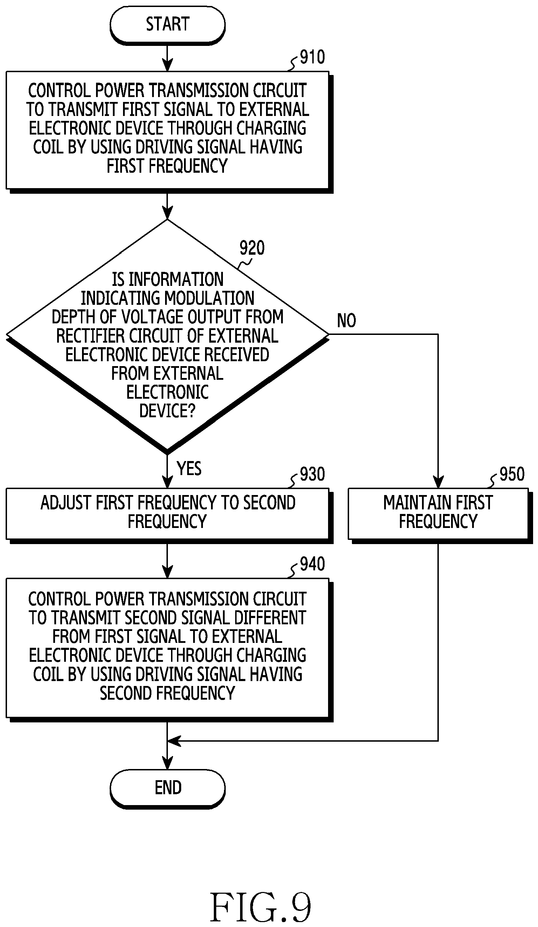

FIG. 9 illustrates a wireless charging method of an electronic device according to an embodiment.

Referring to operation 910, the electronic device (e.g., the electronic device 301 of FIG. 3, FIG. 4, FIG. 5, FIG. 6, and/or FIG. 7) may transmit a first signal output from a power transmission circuit (e.g., the power transmission circuit 411 of FIG. 4) to an external electronic device (e.g., the external electronic device 302 of FIG. 3, FIG. 4, FIG. 5, and/or FIG. 7) through a first charging coil (e.g., the first charging coil 411L of FIG. 4 and/or FIG. 7) by using a first frequency. For example, when power is supplied to the power transmission circuit 411 from the outside (e.g., the power supply device 730 of FIG. 7), a control circuit (e.g., the control circuit 412 of FIG. 4, FIG. 6, and/or FIG. 7) of the electronic device 301 may transmit an AC signal to the external electronic device 302 through the first charging coil 411L by using a first frequency and a first operating voltage for the power transmission circuit 411. The AC signal may be a signal for transmitting power.

Referring to operation 920, the electronic device 301 may identify whether modulation depth information indicating a modulation depth D of an output voltage of a rectifier circuit (e.g., the rectifier circuit 421b of FIG. 4 and/or FIG. 7) of the external electronic device 302 is received from the external electronic device 302. For example, the control circuit 412 of the electronic device 301 may identify whether the modulation depth information is received from the external electronic device 302, based on in-band first communication using a first communication circuit (e.g., the first communication circuit 413a of FIG. 4) (or out-band second communication using a second communication circuit (e.g., the second communication circuit 413b of FIG. 4)). The electronic device 301 may perform operation 930 when the modulation depth information is received, and may perform operation 950 when the information is not received.

Referring to operation 930, when receiving the modulation depth information from the external electronic device 302, the electronic device 301 may control the frequency of the power transmission circuit 411 to be adjusted. In an embodiment, the control circuit 412 of the electronic device 301 may identify whether the modulation depth information is received every specified period, and may adjust the frequency of the power transmission circuit 411 whenever the modulation depth information is received. For example, when receiving the modulation depth information after controlling the first frequency of the power transmission circuit 411 to be adjusted to a second frequency, the control circuit 412 may select a third frequency, different from the first frequency and the second frequency, in a specified frequency band as the frequency of the power transmission circuit 411.

According to an embodiment, the electronic device 301 may determine a variance in the frequency of the power transmission circuit 411, based on the modulation depth information received from the external electronic device 302. For example, the control circuit 412 of the electronic device 301 may control the first frequency of the power transmission circuit 411 to be adjusted to the second frequency higher than the first frequency, based on an amplitude of a charging voltage (or a modulation depth of the charging voltage) indicated by first modulation depth information received in a first period being a first value, and may control the second frequency of the power transmission circuit 411 to be adjusted to the third frequency lower than the first frequency, based on an amplitude of a charging voltage indicated by second modulation depth information received in a second period after the first period being a second value greater than the first value.

According to an embodiment, the electronic device 301 may control the operating voltage of the power transmission circuit 411 to be adjusted in response to adjustment of the frequency of the power transmission circuit 411. For example, when receiving the modulation depth information from the external electronic device 302, the control circuit 412 of the electronic device 301 may increase or decrease the frequency of the power transmission circuit 411, and may control the operating voltage of the power transmission circuit 411 to be adjusted according to the adjusted frequency.

Referring to operation 940, the electronic device 301 may transmit a second signal (or a third signal different from the first signal and the second signal) output from the power transmission circuit 411 to the external electronic device 302 through the first charging coil 411L by using the second frequency (or the third frequency different from the first frequency and the second frequency) adjusted in operation 930. For example, when power is supplied to the power transmission circuit 411 from the outside (e.g., the power supply device 730 of FIG. 7), the control circuit 412 of the electronic device 301 may transmit an AC signal to the external electronic device 302 through the first charging coil 411L by using the adjusted second frequency and an adjusted second operating voltage.

Referring to operation 950, the electronic device 301 may maintain the first frequency and the first operating voltage according to operation 910 when the modulation depth information is not received from the external electronic device 302 in operation 920.

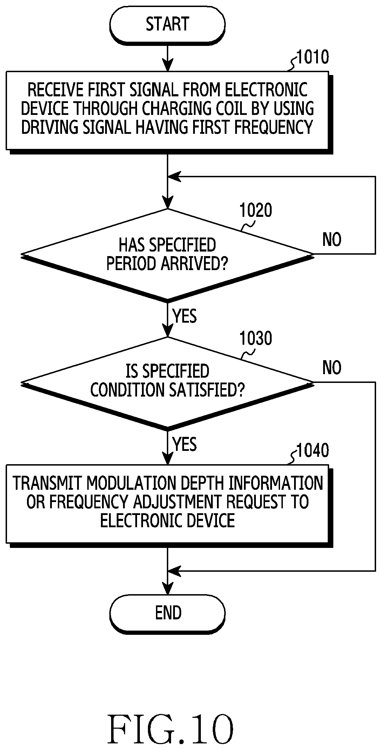

FIG. 10 illustrates a wireless charging method of an external electronic device according to various embodiments.

Referring to operation 1010, the external electronic device (e.g., the external electronic device 302 of FIG. 3, FIG. 4, FIG. 5, and/or FIG. 7) may receive a first signal (e.g., an AC signal) transmitted from an electronic device (e.g., the electronic device 301 of FIG. 3, FIG. 4, FIG. 5, FIG. 6, and/or FIG. 7) through a second charging coil (e.g., the second charging coil 421L of FIG. 4 and/or FIG. 7) by using a driving signal having a first frequency.

Referring to operation 1020, the external electronic device 302 may identify whether a specified period (e.g., 3 sec) has arrived after receiving the first signal from the electronic device 301.

Referring to operation 1030, the external electronic device 302 may identify whether a specified condition is satisfied based on the specified period having arrived in operation 1020. For example, when a modulation depth D of a charging voltage detected from an output terminal (e.g., the output terminal 421b' of FIG. 7) of a rectifier circuit (e.g., the rectifier circuit 421b of FIG. 4 and/or FIG. 7) is a specified value or greater, the external electronic device 302 may determine that the specified condition is satisfied. In another example, when the modulation depth D of the charging voltage detected from the output terminal 421b' of the rectifier circuit 421b is less than the specified value, the external electronic device 302 may determine that the specified condition is not satisfied.

Referring to operation 1040, the external electronic device 302 may transmit a modulation depth information and/or frequency adjustment request to the electronic device 301, based on the specified condition being satisfied in operation 1030. For example, the external electronic device 302 may transmit modulation depth information including at least one of an absolute value of an output voltage detected at the output terminal 421b' of the rectifier circuit 421b or a variance in the output voltage detected at the output terminal 421b' of the rectifier circuit 421b to the electronic device 301. In another example, the external electronic device 302 may calculate a voltage value of the charging voltage, based on a modulation depth of the output voltage detected at the output terminal 421b' of the rectifier circuit 421b. The external electronic device 302 may request frequency adjustment for wireless charging from the electronic device 301, based on the calculated voltage value. In this case, the electronic device 301 may transmit an amount of power corresponding to the calculated voltage value to the external electronic device 302 in response to the request.

According to various embodiments, an electronic device (e.g., the electronic device 301 of FIG. 6) may include a power transmission circuit (e.g., the power transmission circuit 411 of FIG. 6), a charging coil (e.g., the first charging coil 411L of FIG. 6), and a control circuit (e.g., the control circuit 412 of FIG. 6) electrically connected to the power transmission circuit 411 and the charging coil 411L, wherein the control circuit 412 may be configured to control the power transmission circuit 411 such that the power transmission circuit transmits a first signal to an external electronic device (e.g., the external electronic device 302 of FIG. 7) through the charging coil 411L by using a driving signal having a first frequency, identify whether information indicating a modulation depth (e.g., the modulation depth D of FIG. 7) of a voltage output from a rectifier circuit (e.g., the rectifier circuit 421b of FIG. 7) of the external electronic device 302 is received from the external electronic device 302, and determine whether to adjust the first frequency to a second frequency different from the first frequency, based on whether the information is received.

According to various embodiments, the control circuit 412 may be configured to adjust the first frequency to the second frequency, based on reception of the information, and control the power transmission circuit 411 such that the power transmission circuit transmits a second signal to the external electronic device 302 through the charging coil 411L by using a driving signal having the adjusted second frequency, and the second signal may be different from the first signal.

According to various embodiments, the control circuit 412 may be configured to select a third frequency, which is different from the first frequency and the second frequency, in a specified frequency band whenever receiving the information after adjusting the first frequency to the second frequency.

According to various embodiments, the control circuit 412 may be configured to determine a variance in a frequency adjusted from the first frequency to the second frequency, based on a variance in the modulation depth D of the voltage output from the rectifier circuit 421b of the external electronic device.

According to various embodiments, the control circuit 412 may be configured to adjust an operating voltage of the power transmission circuit 411, based on adjustment of the first frequency to the second frequency.

According to various embodiments, the control circuit 412 may be configured to restore the second frequency to the first frequency when the adjusted operating voltage is not included in a specified voltage range.

According to various embodiments, a gain of the second signal in the second frequency may correspond to a gain of the second signal according to a switching operation of a modulation circuit (e.g., the modulation circuit 722 of FIG. 7) of the external electronic device 302.

According to various embodiments, the control circuit 412 may be configured to maintain the first frequency, based on the information not being received.

According to various embodiments, the control circuit 412 may be configured to identify whether the information is received every specified period.

According to various embodiments, the information may include an absolute value indicating the modulation depth D of the voltage output from the rectifier circuit 421b of the external electronic device or information about an increase or decrease in the modulation depth D of the voltage output from the rectifier circuit 421b.

According to various embodiments, a wireless charging method may include controlling a power transmission circuit 411 of an electronic device 301 such that the power transmission circuit transmits a first signal to an external electronic device 302 through a charging coil 411L of the electronic device 301 by using a driving signal having a first frequency (e.g., operation 910 of FIG. 9), identifying whether information indicating a modulation depth D of a voltage output from a rectifier circuit 421b of the external electronic device 302 is received from the external electronic device 302 (e.g., operation 902 of FIG. 9), and determining whether to adjust the first frequency to a second frequency different from the first frequency, based on whether the information is received (e.g., operation 930 or operation 950 of FIG. 9).

According to various embodiments, the wireless charging method may include adjusting the first frequency to the second frequency, based on reception of the information (e.g., operation 930) and controlling the power transmission circuit 411 such that the power transmission circuit transmits a second signal to the external electronic device 302 through the charging coil 411L by using a driving signal having the adjusted second frequency (e.g., operation 940 of FIG. 9), wherein the second signal may be different from the first signal.

According to various embodiments, the wireless charging method may further include selecting a third frequency, which is different from the first frequency and the second frequency, in a specified frequency band whenever receiving the information after adjusting the first frequency to the second frequency.

According to various embodiments, the adjusting of the first frequency to the second frequency (operation 930) may include determining a variance in a frequency adjusted from the first frequency to the second frequency, based on a variance in the modulation depth D of the voltage output from the rectifier circuit 421b of the external electronic device.

According to various embodiments, the wireless charging method may further include adjusting an operating voltage of the power transmission circuit, based on adjustment of the first frequency to the second frequency.

According to various embodiments, the adjusting of the operating voltage may include restoring the second frequency to the first frequency when the adjusted operating voltage is not included in a specified voltage range.

According to various embodiments, a gain of the second signal in the second frequency may correspond to a gain of the second signal according to a switching operation of a modulation circuit 722 of the external electronic device 302.

According to various embodiments, the wireless charging method may further include maintaining the first frequency (operation 950) when the information is not received.

According to various embodiments, the identifying whether the information is received (operation 920) may include identifying whether the information is received every specified period.

According to various embodiments, the information may include an absolute value indicating the modulation depth D of the voltage output from the rectifier circuit 421b or information about an increase or decrease in the modulation depth D of the voltage output from the rectifier circuit 421b.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1 st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program #40) including one or more instructions that are stored in a storage medium (e.g., internal memory #36 or external memory #38) that is readable by a machine (e.g., the electronic device #01). For example, a processor (e.g., the processor #20) of the machine (e.g., the electronic device #01) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a power transmission circuit;
a charging coil; and
a control circuit electrically connected to the power transmission circuit and the charging coil,
wherein the control circuit is configured to:
control the power transmission circuit such that the power transmission circuit transmits a first signal to an external electronic device through the charging coil by using a driving signal having a first frequency;
identify whether information indicating a modulation depth of a voltage output from a rectifier circuit of the external electronic device is received from the external electronic device; and
determine whether to adjust the first frequency to a second frequency different from the first frequency, based on whether the information is received.

2. The electronic device of claim 1, wherein the control circuit is configured to:
adjust the first frequency to the second frequency, based on reception of the information; and
control the power transmission circuit such that the power transmission circuit transmits a second signal to the external electronic device through the charging coil by using a driving signal having the adjusted second frequency, the second signal being different from the first signal.

3. The electronic device of claim 2, wherein the control circuit is configured to select a third frequency, which is different from the first frequency and the second frequency, in a specified frequency band whenever receiving the information after adjusting the first frequency to the second frequency.

4. The electronic device of claim 2, wherein the control circuit is configured to determine a variance in a frequency adjusted from the first frequency to the second frequency, based on a variance in the modulation depth of the voltage output from the rectifier circuit of the external electronic device.

5. The electronic device of claim 2, wherein the control circuit is configured to adjust an operating voltage of the power transmission circuit, based on adjustment of the first frequency to the second frequency.

6. The electronic device of claim 5, wherein the control circuit is configured to restore the second frequency to the first frequency in case that the adjusted operating voltage is not included in a specified voltage range.

7. The electronic device of claim 2, wherein a gain of the second signal in the second frequency corresponds to a gain of the second signal according to a switching operation of a modulation circuit of the external electronic device.

8. The electronic device of claim 1, wherein the control circuit is configured to maintain the first frequency, based on the information not being received.

9. A wireless charging method comprising:
controlling a power transmission circuit of an electronic device such that the power transmission circuit transmits a first signal to an external electronic device through a charging coil of the electronic device by using a driving signal having a first frequency;
identifying whether information indicating a modulation depth of a voltage output from a rectifier circuit of the external electronic device is received from the external electronic device; and
determining whether to adjust the first frequency to a second frequency different from the first frequency, based on whether the information is received.

10. The wireless charging method claim 9, comprising:
adjusting the first frequency to the second frequency, based on reception of the information; and
controlling the power transmission circuit such that the power transmission circuit transmits a second signal to the external electronic device through the charging coil by using a driving signal having the adjusted second frequency,
wherein the second signal is different from the first signal.

11. The wireless charging method of claim 10, further comprising selecting a third frequency, which is different from the first frequency and the second frequency, in a specified frequency band whenever receiving the information after adjusting the first frequency to the second frequency.

12. The wireless charging method of claim 10, wherein the adjusting of the first frequency to the second frequency comprises determining a variance in a frequency adjusted from the first frequency to the second frequency, based on a variance in the modulation depth of the voltage output from the rectifier circuit of the external electronic device.

13. The wireless charging method of claim 10, further comprising adjusting an operating voltage of the power transmission circuit, based on adjustment of the first frequency to the second frequency.

14. The wireless charging method of claim 13, wherein the adjusting of the operating voltage comprises restoring the second frequency to the first frequency in case that the adjusted operating voltage is not included in a specified voltage range.

15. The wireless charging method of claim 10, wherein a gain of the second signal in the second frequency corresponds to a gain of the second signal according to a switching operation of a modulation circuit of the external electronic device.
